# EUROPEAN PATENT SPECIFICATION

(11) **EP 2 325 073 B1**
(45) Date of publication and mention of the grant of the patent: **09.01.2013**
(21) Application number: 10182579.2
(22) Date of filing: 29.09.2010
(51) Int. Cl.: B62K 19/36, B62J 1/08

(54) **Angle adjusting device for bicycle saddle**
Winkeleinstellvorrichtung für Fahrradsattel
Dispositif de réglage d'inclinaison pour selle de bicyclette

(30) Priority: 24.11.2009 KR 20090114089
(43) Date of publication of application: 25.05.2011
(73) Proprietor: Kim, Chun-Choo, Seoul 120-113 (KR)
(72) Inventor: Kim, Chun-Choo, Seoul 120-113 (KR)
(74) Representative: Pulieri, Gianluca Antonio

(56) References cited:
- KR-A- 20090 085 900
- US-A1- 2006 006 707
- US-B1- 7 621 595

## Description

### Field of the Invention

The present invention relates to an angle adjuster for a bicycle saddle, in more detail, an angle adjuster for a bicycle saddle that allows a user to maintain a stable position by adjusting angle and height of the saddle while the bicycle travels.

### Description of the related art

In general, bicycles are vehicles that a user ride by rotating its wheels with two legs and the user sits on the saddle with the hands holding the handlebars and alternatively pushes the pedals with two legs such that the wheel are rotated by a chain. Although there are usually two wheels, there may be one or three wheels. Those human-powered bicycles have been widely used as one of typical means of transportation, and particularly, can be recently applied for various fields, as sport outfits improving health and recreation means, while demand is increasing for the environment-friendly features.

The structure of the bicycles of the related art include: a front wheel and a rear wheel that rotate on the ground to move the bicycles; a frame that has handlebars steering the front wheel at the front upper portion and supporting the front wheel and the rear wheel to be rotatable; pedals that are linked with the rear wheel by a chain to rotate the rear wheel; and a saddle assembly that is mounted at the rear upper portion of the frame for a user to ride.

Further, there have been bicycles equipped with a height adjuster to adjust height of the saddles to fit the body condition in the related art.

However, the saddles were fixed perpendicularly to the frame of the bicycles in the bicycles of the related art, such that it was difficult to adjust angle of the saddles to fit the user's body shape and riding position. That is, since the angle of the saddle were fixed, it was difficult to satisfy all of users having various body shapes. Further, the user's position inclines forward or backward from the bicycles, when the user goes up or comes down a slope with the bicycles, in which since the angle of the saddles is fixed, the user has difficulty in maintaining a comfortable position, thereby increasing the chance of an accident.

Therefore, the applicant (s) has made an application of an angle adjuster for a bicycle saddle in order to overcome the problems, which is disclosed in Korean Patent Publication No.2009-0085900, titled "Angle adjusting device for bicycle saddle". However, according to the related art, users have to directly operate a hinge unit of an angle adjuster under the saddle to adjust angle of the saddle, such that it was difficult to adjust the angle of the saddle while the bicycles run.

### Summary of the Invention

### Problems to be Solved by the Invention

The present invention addresses the problems of the related art and it is an object of the present invention to provide an angle adjuster for a bicycle saddle that allows users to ride the bicycle in a stable position by adjusting angle of the saddle to fit the body shapes of various users, and to easily correct the position by adjusting the angle of the saddle in accordance with the riding conditions of the user, by using an operating lever even though the bicycles runs.

Further, it is another object of the present invention to provide an angle adjuster for a bicycle saddle that makes it possible to adjust height of the saddle in accordance with riding conditions of the user while the bicycle runs.

### Means for Solving the Problems

In order to achieve the objects of the present invention, an angle adjuster for a bicycle saddle that is installed between a frame of a bicycle and a saddle and includes: a frame connector connected to the frame; a saddle connector rotatably connected to the upper end of the frame connector and supporting the saddle; an angle adjusting assembly including a main clutch fixing and releasing the frame connector and the saddle connector, and controlling rotational angle of the saddle connector with respect to the frame connector by the release operation of the main clutch; an operating lever mounted on the frame to operate the main clutch; and a wire connecting the main clutch with the operating lever and operating the main clutch, when the operating lever is operated.

Further, the angle adjusting assembly includes: a main clutch including a first adjusting member that has a plurality of first teeth at one side and is fixed to the frame connector and a second adjusting member that has a plurality of second teeth engaged with the first teeth of the first adjusting member and is fixed to the saddle connector; and a clutch control shaft that is fixed to any one of the first adjusting member and the second adjusting member and connected to the wire to engage or disengage the first adjusting member and the second adjusting member, when the operating lever is operated.

Further, the angle adjuster for a bicycle saddle further includes a sub-clutch including a third adjusting member that has a plurality of third teeth and is fixed to the saddle connector and a fourth adjusting member that has a plurality of fourth teeth engaged with the third teeth of the third adjusting member and is fixed to the frame connector, in which any one of the third adjusting member and the fourth adjusting member of the sub-clutch is fixed to the clutch control shaft, and the third adjusting member and the fourth adjusting member are controlled to be engaged or disengaged by the clutch control shaft.

Further, the angle adjuster for a bicycle saddle further includes an elastic member disposed between the main clutch and the sub-clutch to provide elastic force such that the first adjusting member and the second adjusting member, and the third adjusting member and the fourth adjusting member are engaged each other.

Further, the angle adjuster for a bicycle saddle further includes: a saddle support shaft supporting the saddle, reciprocating in the saddle connector, and having a plurality of locking grooves formed in the longitudinal direction of the shaft; a support spring elastically supporting the saddle support shaft such that the saddle is spaced apart from the saddle connector; a locking member selective locked in the locking grooves to control height of the saddle support shaft; a sub-operating lever mounted on the frame operating the locking member; and a sub-wire connecting the locking member with the sub-operating lever and operating the locking member, when the sub-operating lever is operated.

Further, the angle adjuster for a bicycle saddle further includes a sub-elastic member disposed between the saddle connector and the locking member to provide elastic force such that the locking member is locked in any one of the locking grooves.

Further, the angle adjuster for a bicycle saddle further includes: a plurality of locking grooves formed in the longitudinal direction of the frame connector and received in the frame; a support spring elastically supporting the frame connector such that the frame connector is spaced apart from the frame; a locking member selective locked in the locking grooves to control height of the frame connector with respect to the frame; a sub-operating lever mounted on the frame operating the locking member; and a sub-wire connecting the locking member with the sub-operating lever and operating the locking member, when the sub-operating lever is operated.

Further, the angle adjuster for a bicycle saddle further includes a sub-elastic member disposed between the frame and the locking member to provide elastic force such that the locking member is locked in any one of the locking grooves.

### Effect of the Invention

As described above, an angle adjuster for a bicycle saddle according to the present invention makes it possible to adjust angle of the saddle to fit the body shapes of users such that they can ride the bicycle in a comfortable position. Further, it is possible to prevent an accident by appropriately adjusting angle of the saddle such that the user's body does not inclined in one direction, when going up or coming down a slope. In particular, it is possible for the users to freely adjust the angle and height of the saddle by operating the operating lever while the bicycle runs, thereby providing the users with convenience.

### Detailed Description of the Invention

Embodiments of the present invention are described hereafter, but the present invention is not limited to the following embodiments.

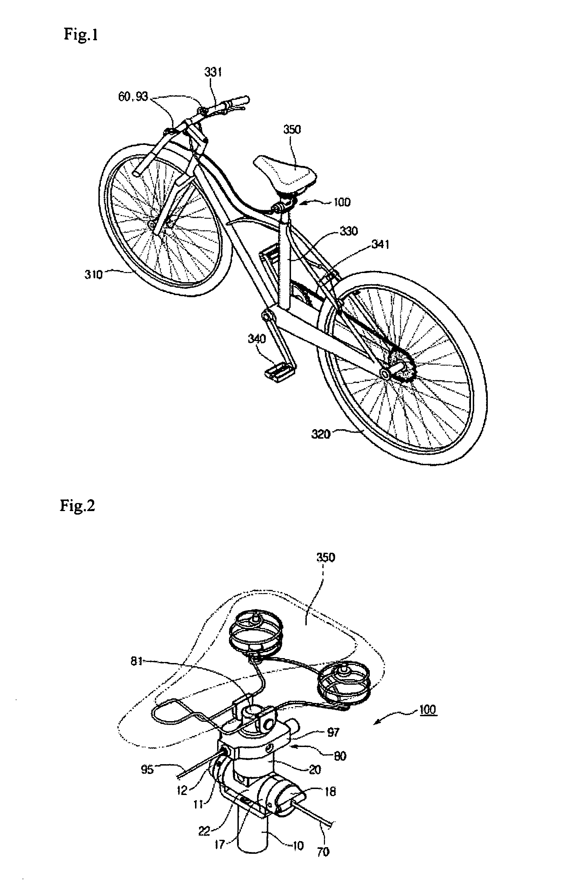

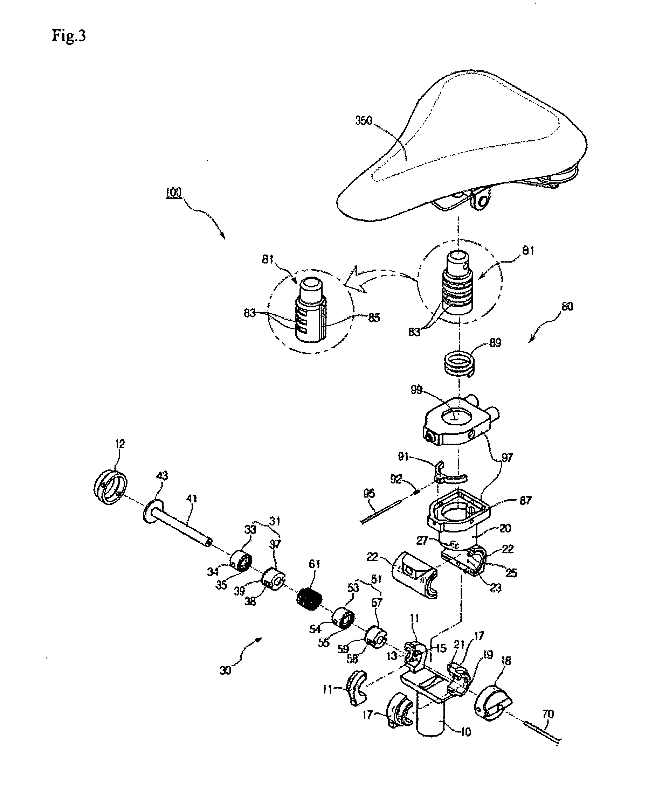

FIG. 1 is a view showing a bicycle equipped with an angle adjuster for a bicycle saddle according to a first embodiment of the present invention, FIG. 2 is a perspective view showing the structure of the angle adjuster for a bicycle saddle according to the first embodiment of the present invention, and FIG. 3 is an exploded perspective view showing the structure of the angle adjuster for a bicycle saddle according to the first embodiment of the present invention.

Referring to FIGS. 1 to 3, a bicycle equipped with an angle adjuster for a bicycle saddle according to a first embodiment of the present invention include: a front wheel 310 and a rear wheel 320 that rotate on the ground to move the bicycle; a frame 330 that has handlebars steering the front wheel 310 at the front upper portion and supporting the front wheel 310 and the rear wheel 320 to be rotatable; pedals 340 that are linked with the rear wheel 320 by a chain 341 to rotate the rear wheel 320; a saddle 350 that is mounted at the rear upper portion of the frame 330 for a user to ride; and an angle adjuster 100 for a saddle that is disposed between the frame 330 and the saddle 350 and makes it possible to adjust angle of the saddle 350 by an operating lever 60 mounted on the frame 330.

In this configuration, the angle adjuster for a bicycle saddle 100 according to the first embodiment includes: a frame connector 10 connected to the frame 350; a saddle connector 20 connected to the upper end of the frame connector 10 to support the saddle 350; an angle adjusting assembly 30 controlling the rotational angle of the saddle connector 20 by using clutches 31, 51; the operating lever 60 operating the clutches 31, 51; and a wire 70 connecting the clutches 31, 51 with the operating lever 60.

The frame connector 10 is connected to the frame 330 of the bicycle which is disposed under the saddle 350 and has a hinge structure together with the saddle connector 20 and the angle adjusting assembly 30 such that the saddle connector 20 is rotatably connected to the upper end. That is, a first housing 11 and a second housing 17 covering the angle adjusting assembly 30, which functions as a shaft, are disposed at both sides of the upper end of the frame connector 10 and the saddle connector 20 is rotatably connected to the angle adjusting assembly 30, which is disposed through the first housing 11 and the second housing 17.

In this configuration, a first receiving groove 13 that receives one end of the angle adjusting assembly 300 is formed on the inner side of the first housing 11 and a fixing protrusion 15 that is fitted in the angle adjusting assembly 30 is formed in the first receiving groove 13. Further, a second receiving groove 19 that receives the other end of the angle adjusting assembly 30 is formed on the inner side of the second housing 17 and a guide protrusion 21 that is fitted and guided in the angle adjusting assembly 30 is formed in the second receiving groove 19.

Further, the first housing 11 and the second housing 17 of the frame connector 10 is provided with a pair of covers 12, 18 that finish the first receiving groove 13 and the second receiving groove 21.

The saddle connector 20 supports the saddle 350 under the saddle 350 and is rotatably connected to the upper end of the frame connector 10 by a third housing 22. The third housing 22 has a third receiving groove 23 to cover the angle adjusting assembly 30 disposed in the first housing 11 and the second housing 17 of the frame connector 10, and a fixing protrusion 25 and a guide protrusion 27 which are fitted in the angle adjusting assembly 30 are formed in the third receiving groove 23.

The angle adjusting assembly 30 is received in the first housing 11 and the second housing 17 of the frame connector 10 and the third housing 22 of the saddle connector 20, includes one or more clutches 31, 51 that fix and release the frame connector 10 and the saddle connector 20, and controls the rotational angle of the saddle connector 20 with respect to the frame connector 10 by the release operation of the clutches 31, 51.

The angle adjusting assembly 30 includes: a main clutch 31 that has a first adjusting member 33 having a plurality of first teeth 35 at one side and fixed to the frame connector 10 and a second adjusting member 37 having a plurality of second teeth 39 engaged with the first teeth 35 of the first adjusting member 33 and fixed to the saddle connector 20; and a clutch control shaft 41 that is fixed to any one of the first adjusting member 33 and the second adjusting member 37 of the main clutch 31 and connected to the wire 70 to engage or disengage the first adjusting member 33 and the second adjusting member 37 by the operation of the operating lever 60.

In this configuration, the clutch control shaft 41 has one end with a press plate 43 and the other end fixed to the wire 70 connected with the operating lever 60, and is disposed through the first receiving groove 13 and the second receiving groove 19 of the frame connector 10 and the third receiving groove 23 of the saddle connector.

The first adjusting member 33 has a fixing groove 34 formed in the outer circumference which is fitted on the fixing protrusion 15 in the first receiving groove 13 of the first housing 11, and is rotatably fitted on the clutch control shaft 41.

The second adjusting member 37 has a long guide groove 38 in the outer circumference to be able to slide along the guide protrusion 27 in the third receiving groove 23 of the third housing 22, and is integrally fixed to the clutch control shaft 41.

Further, the angle adjusting assembly 30 further includes a sub-clutch 51 that includes a third adjusting member 53 having a plurality of third teeth 55 at one side and fixe to the saddle connector 20 and fourth adjusting member 57 having a plurality of fourth teeth 59 engaged with the third teeth 55 of the third adjusting member 53 and fixed to the frame connector 10.

The third adjusting member 53 has a fixing groove 54 in the outer circumference which is fitted on the fixing protrusion 25 in the third receiving groove 23 of the third housing 22, and is rotatably fitted on the clutch control shaft 41.

The fourth adjusting member 57 has a long guide groove 58 in the outer circumference to be able to slide along the guide protrusion 21 in the second receiving groove 19 of the second housing 17, and is integrally fixed to the clutch control shaft 41.

According to the configuration described above, the main clutch 31 and the sub-clutch 51 are arranged in parallel on the clutch control shaft 41, the first adjusting member 33 and the second adjusting member 37 of the main clutch 31 are arranged to face each other on the clutch control shaft 41 such that the first teeth 35 of the first adjusting member 33 are engaged with the second teeth 39 of the second adjusting member 37. Further, the third adjusting member 53 and the fourth adjusting member 57 of the sub-clutch 51 are also arranged to face each other on the clutch control shaft 41 such that the third teeth 55 of the third adjusting member 53 are engaged with the fourth teeth 59 of the fourth adjusting member 57. Therefore, as the operating lever 60 is operated, the clutch control shaft 41 connected to the wire 70 reciprocates the second adjusting member 37 and the fourth adjusting member 57, which are integrally fixed to the clutch control shaft 41, such that the first adjusting member 33, the second adjusting member 37, the third adjusting member 53, and the fourth adjusting member 57 are engaged or disengaged.

Further, it is possible to disengage the first adjusting member 33, the second member 37, the third adjusting member 53, and the fourth adjusting member 57 by pressing the press plate 43 of the clutch control shaft 41 such that the clutch control shaft 41 moves, without operating the operating lever 60.

Furthermore, an elastic member 61 may be disposed between the main clutch 31 and the sub-clutch 51 to engage the first adjusting member 33 with the second adjusting member 37 and the third adjusting member 53 with the fourth adjusting member 57.

In other words, the elastic member 61 is fitted around the clutch control shaft 41 between the main clutch 31 and the sub-clutch 51 and elastically returns and engages the first adjusting member 33, the second adjusting member 37, the third adjusting member 53, and the fourth adjusting member 57, which have been disengaged by the operation of the operating lever 60.

The operating lever 60 is mounted on the frame 330 of the bicycle to operate the main clutch 31 and the sub-clutch 51. That is, the operating lever 60 is operated to move the clutch control shaft 41 forward or backward such that the main clutch 31 and the sub-clutch 51 are respectively engaged or disengaged. In this configuration, it is preferable that the operation lever 60 is installed on the handlebars 332 of the frame 330 of the bicycle to provide the user with operational convenience.

The wire 70 connects the clutch control shaft 41 controlling the main clutch 31 and the sub-clutch 51 with the operating lever 60 and operates the main clutch 31 and the sub-clutch 51 by moving the clutch control shaft 41 forward or backward, when the user operates the operating lever 60.

Meanwhile, the angle adjuster for a bicycle saddle 100 according to the first embodiment of the present invention may further include a height adjusting assembly 80 that makes it possible to adjust height of the saddle 350.

The height adjusting assembly 80 is composed of a saddle support shaft 81 that supports the saddle 350 of the bicycle, can reciprocate in the saddle connector 20, and has a plurality of locking grooves 83 formed in the longitudinal direction of the shaft, a support spring 89 that elastically supports the saddle support shaft 81 such that the saddle 350 of the bicycle is spaced apart from the saddle connector 20, a locking member 91 that is selective locked in the locking grooves 83 of the saddle support shaft 81 to control height of the saddle support shaft 81, a sub-operating lever 93 that is mounted on the frame 330 of the bicycle and operate the locking member 91, and a sub-wire 95 that connects the locking member 91 with the sub-operating lever 93 and operates the locking member 91, when the sub-operating lever 93 is operated.

A case 97 that receives the locking member 91 is disposed at the upper end of the saddle connector 20 and the saddle support shaft 81 protrudes through a through-hole 99 formed through the case 97.

Further, a guide rail 87 is vertically formed inside the saddle connector 20 where the saddle support shaft 81 is received and a rail groove 85 corresponding to the guide rail 87 is also formed on the saddle support shaft 81, such that they are combined. That is, the saddle support shaft 81 can ascend/descend in a predetermined direction along the guide rail 87 of the saddle connector 20 which is fitted in the rail groove 85.

According to the configuration described above, the support spring 89 received in the saddle connector 20 elastically supports the saddle support shaft 81 supporting the saddle 350 and the locking member 91 in the case 97 is locked in the locking groove 83 of the saddle support shaft 81, such that the height of the saddle support shaft 81 is fixed. In this structure, the height of the saddle support shaft 81 can be adjusted by operating the sub-operating lever 93 such that the locking member 91 connected with the sub-wire 95 moves forward or backward and the locking member 91 is selectively locked in the locking groove 83 of the saddle support shaft 81.

Further, a sub-elastic member 92 is disposed between the locking member 91 and the case 97 of the saddle connector 20 to provide elastic force such that the locking member 91 is locked in any one of the locking grooves 83 of the saddle support shaft 81.

The operation of the angle adjuster for a bicycle saddle having the above configuration according to the first embodiment of the present invention is described hereafter.

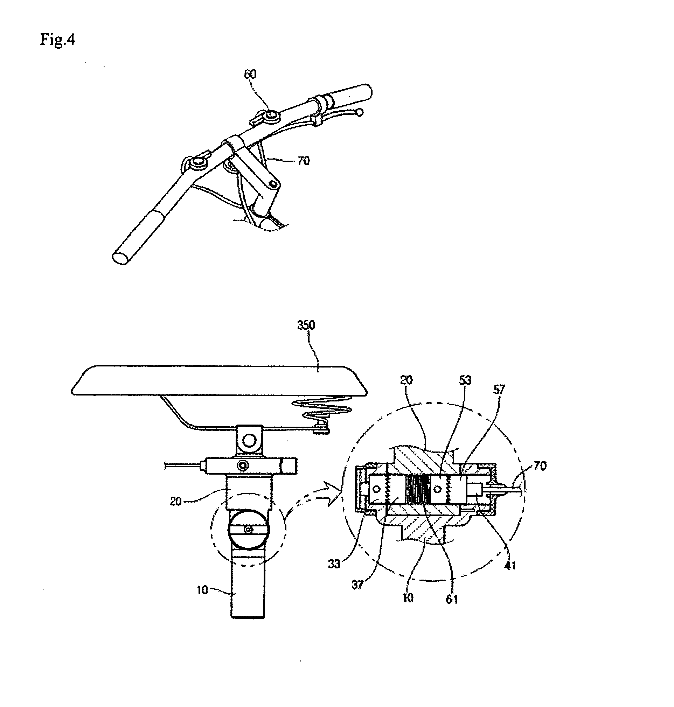

FIGS. 4 to 6 are views illustrating the angle adjustment operation of the angle adjuster for a bicycle saddle according to the first embodiment of the present invention.

As shown in FIG. 4, when the operating lever 60 is not operated by a user, the first adjusting assembly 33 fixed to the frame connector 10 and the second adjusting assembly 37 fixed to the saddle connector 20 are engaged on the clutch control shaft 41 connected with the operating lever 60 by the wire 70, and the third adjusting assembly 53 fixed to the saddle connector 20 and the fourth adjusting assembly 57 fixed to the frame connector 10 are engaged.

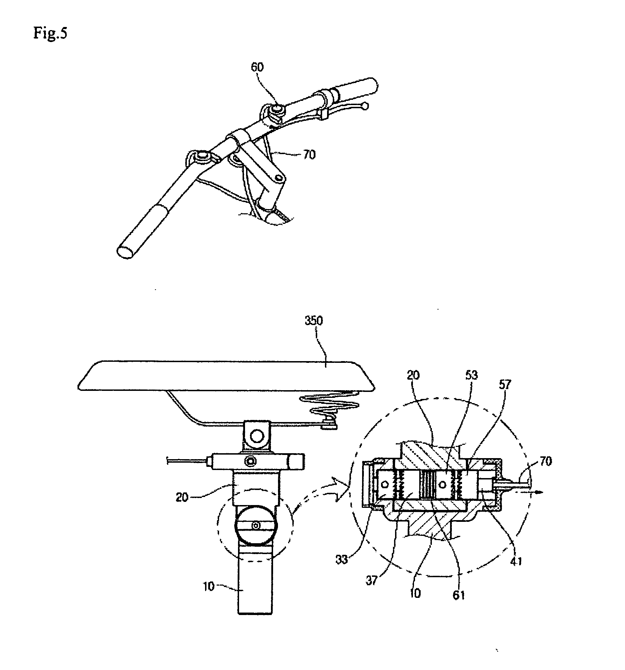

As shown in FIG. 5, as a user operates the operating lever 60 to adjust the angle of the saddle 350, the wire 70 connected with the operating lever 60 is pulled and the clutch control shaft 41 disengages the first adjusting assembly 33 from the second adjusting assembly 37 and the third adjusting assembly 53 from the fourth adjusting assembly 57 such that the saddle connector 20 supporting the saddle 350 can rotate with respect to the frame 10.

In other words, as the operating lever 60 is operated, the clutch control shaft 41 fixed to the wire 70 moves backward, and the second adjusting assembly 37 and the fourth adjusting assembly 57, which are fixed to the clutch control shaft 41, are spaced, such that the first adjusting assembly 33 and the second adjusting assembly 37 are disengaged and the third adjusting assembly 53 and the fourth adjusting assembly 57 are disengaged. As a result, the second adjusting assembly 37 and the fourth adjusting assembly 53, which are fixed to the saddle connector 20, are disengaged with respect to the first adjusting assembly 33 and the fourth adjusting assembly 57, which are fixed to the frame connector 10, such that the saddle connector 20 becomes rotatable with respect to the frame connector 10.

In this position, the user can adjust the angle of the saddle 350 and can also adjust the angle even on the saddle 350, and thus, it is possible to adjust the angle of the saddle 350 while the bicycle runs.

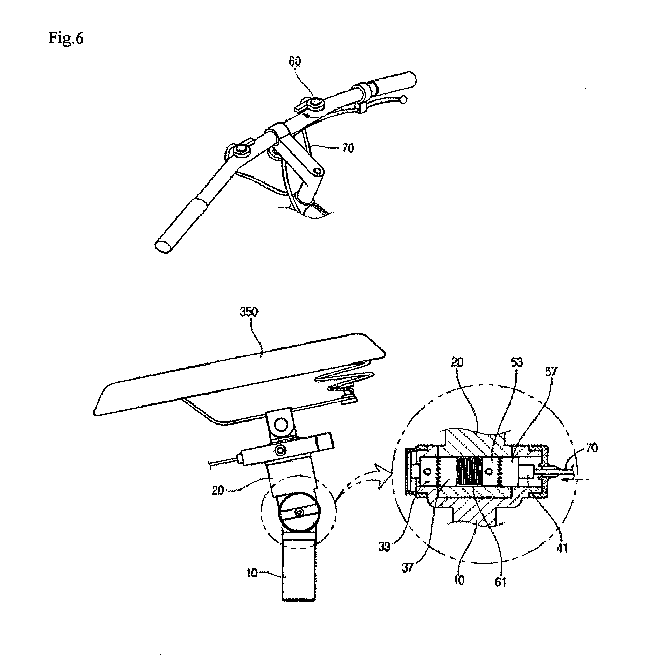

Next, as shown in FIG. 6, the angle of the saddle connector 20 is fixed with respect to the frame connector 10 by operating the operating lever 60 in the opposite way, after the angle adjustment of the saddle 350 is finished, in which the wire 70 is pushed, the clutch control shaft 41 connected to the wire 70 returns forward, and the first adjusting assembly 33, the second adjusting assembly 37, the third adjusting assembly 53, and the fourth adjusting assembly 57 are engaged, respectively. In this operation, the elastic member 61 between the second adjusting assembly 37 and the fourth adjusting assembly 57 helps the clutch control shaft 41 returns by providing elastic force.

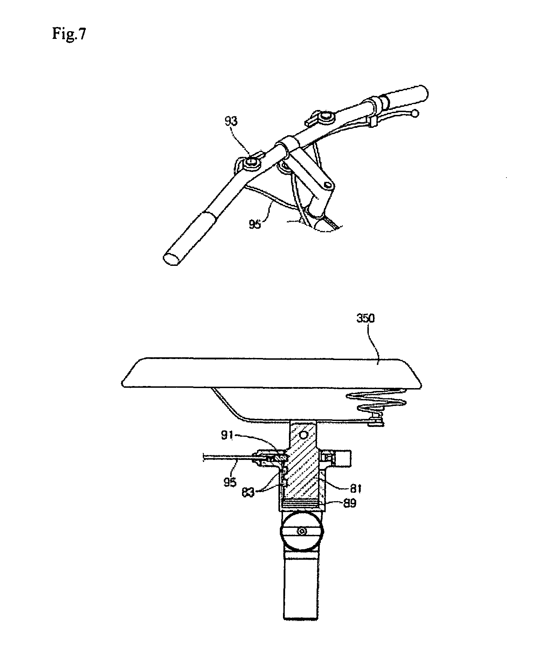

FIGS. 7 to 9 are views the height adjustment operation of the angle adjuster for a bicycle saddle according to the first embodiment of the present invention.

As shown in FIG. 7, the locking member 91 is locked in the uppermost locking groove 83 in the locking grooves 83 of the saddle support shaft 81 and fixes the height of the saddle 350, when the sub-operating lever 93 is not operated by the user.

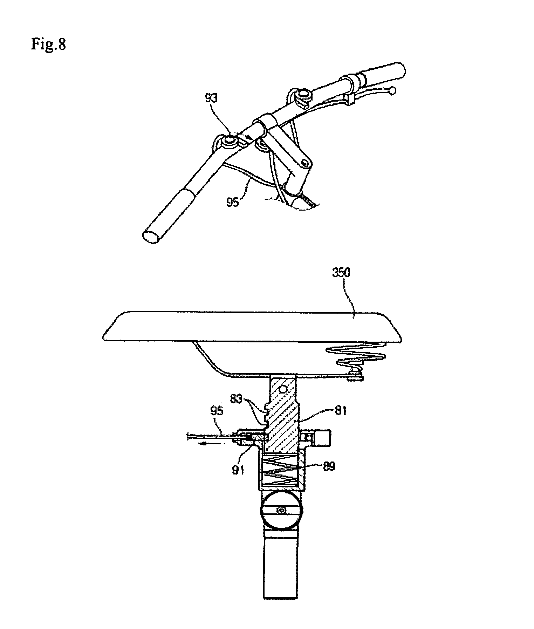

As shown in FIG. 8, as the user operates the sub-operating lever 93 to adjust the height of the saddle 350, the sub-wire 95 connected with the sub-operating lever 93 is pulled and the locking member 91 is separated from the locking groove 83 of the saddle support shaft 81 supporting the saddle 350 and the support spring 89 lifts the saddle support shaft 81.

In this position, the user can adjust the height of the saddle 350 and can also adjust the height even on the saddle 350, and thus, it is possible to adjust the height of the saddle 350 while the bicycle runs.

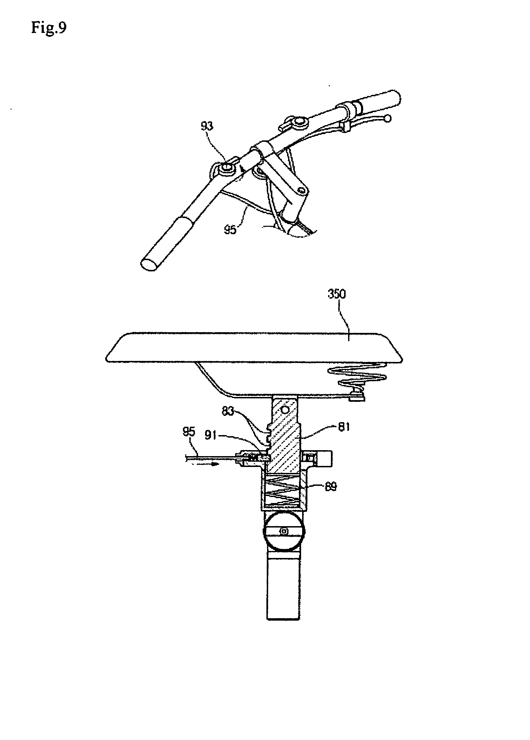

Next, as shown in FIG. 9, the height of the saddle 350 is fixed by operating the sub-operating lever 93 in the opposite way, after the height adjustment of the saddle 350 is finished, in which the sub-wire 95 is pushed and the locking member 91 connected to the sub-wire 95 is locked in any one of the locking grooves 83 of the saddle support shaft 81.

The configuration and operation of an angle adjuster for a bicycle saddle according to a second embodiment of the present invention is described hereafter.

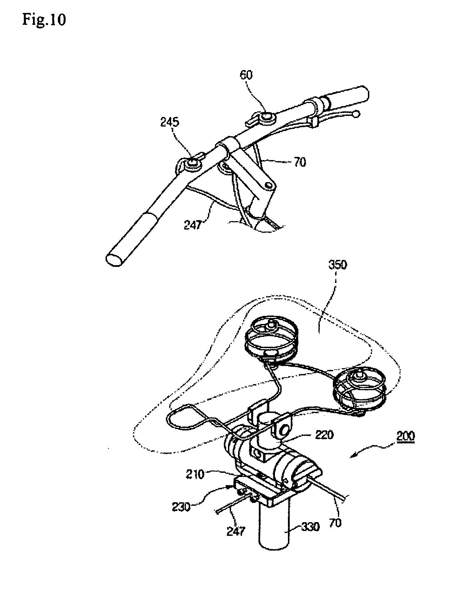

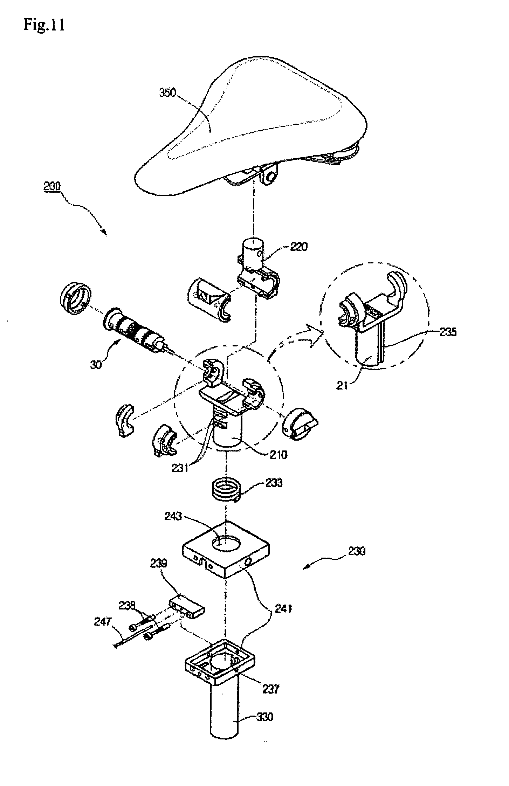

FIG. 10 is a perspective view illustrating the configuration of an angle adjuster for a bicycle saddle according to a second embodiment of the present invention. FIG. 11 is an exploded perspective view illustrating the configuration of the angle adjuster for a bicycle saddle according to the second embodiment of the present invention.

Referring to FIGS. 10 and 11, an angle adjuster 200 for a bicycle saddle according to the second embodiment of the present invention includes a frame connector 210, a saddle connector 220, an angle adjusting assembly 30, an operating lever 60, and a wire 70, which have the same configuration and operation as in the angle adjuster 100 for a bicycle saddle according to the first embodiment of the present invention, and a height adjusting assembly 240 is mounted on the frame 330 of the bicycle and the frame connector 210.

The lower end portion of the body of the frame connector 210 is received in the frame 330 of the bicycle, elastically supported by a support spring 233 disposed in the frame 330, and reciprocated by the height adjusting assembly 230, thereby adjusting the height.

The saddle connector 220 is disposed rotatably on the frame connector 210 while supporting the saddle 350, and the rotational angle of adjusted by the operation of the angle adjusting assembly 30. That is, as a user operates the operating lever 60 and the wire 70 is pulled, the angle adjusting assembly 30 connected to the wire 70 is operated, such that the rotational angle of the saddle connector 220 can be adjusted.

The height adjusting assembly 230 is composed of a plurality of locking grooves 231 formed in the longitudinal direction of the frame connector 210 and received in the frame 330 of the bicycle, a support spring 233 elastically supporting the frame connector 210 such that the frame connector 210 is spaced apart from the frame 330 of the bicycle, a locking member 239 selectively locked in the locking grooves 231 of the frame 330 to control the height of the frame connector 210 with respect to the frame 330 of the bicycle, a sub-operating lever 245 mounted on the frame 330 of the bicycle to operate the locking member 239, and a sub-wire 237 connecting the locking member 239 with the sub-operating lever 245 and operating the locking member 239, when the sub-operating lever 245 is operated. In this configuration, a case 241 that receives the locking member 239 is disposed at the upper end of the frame 330 and the frame connector 239 is inserted through a through-hole 234 formed through the case 241.

In this configuration, a guide rail 237 is vertically formed inside the frame 330 where the frame connector 210 is received and a rail groove 235 corresponding to the guide rail 237 is also formed on the frame connector 210, such that they are combined. That is, the frame connector 210 can ascend/descend in a predetermined direction along the guide rail 237 of the frame 330 which is fitted in the rail groove 235.

According to the configuration described above, since the support spring 233 supports the frame connector 210 in the frame 330 of the bicycle where the frame connector 210 is connected and the locking member 239 disposed in the case 241 is locked in the locking groove 231 of the frame connector 210, the height of the frame connector 210 is fixed. In this configuration, it is possible to adjust the height of the frame connector 210 with respect to the frame 330 of the bicycle by operating the sub-operating lever 245, in which the locking groove 239 connected to the sub-wire 247 moves forward or backward such that the locking member 239 is selectively locked in the locking grooves 231 of the frame connector 210.

Further, a sub-elastic member 238 is disposed between the locking member 239 and the case 241 of the frame connector 210 to provide elastic force such that the locking member 239 is locked in any one of the locking grooves 231 of the frame connector 210.

As described above, an angle adjuster for a bicycle saddle according to the present invention makes it possible to adjust angle of the saddle to fit the body shapes of users such that they can ride the bicycle in a comfortable position. Further, it is possible to prevent an accident by appropriately adjusting angle of the saddle such that the user's body does not inclined in one direction, when going up or coming down a slope. In particular, it is possible for the users to freely adjust the angle and height of the saddle by operating the operating lever while the bicycle runs, thereby providing the users with convenience.

It should be understood that the present invention may be modified in various ways, without departing from the scope of the present invention, by those skilled in the art, and is not limited to the embodiments described above and the accompanying drawings.

### Brief Description of the Drawings

FIG. 1 is a view showing a bicycle equipped with an angle adjuster for a bicycle saddle according to a first embodiment of the present invention.

FIG. 2 is a perspective view showing the structure of the angle adjuster for a bicycle saddle according to the first embodiment of the present invention.

FIG. 3 is an exploded perspective view showing the structure of the angle adjuster for a bicycle saddle according to the first embodiment of the present invention.

FIGS. 4 to 6 are views illustrating the angle adjustment operation of the angle adjuster for a bicycle saddle according to the first embodiment of the present invention.

FIGS. 7 to 9 are views the height adjustment operation of the angle adjuster for a bicycle saddle according to the first embodiment of the present invention.

FIG. 10 is a perspective view illustrating the configuration of an angle adjuster for a bicycle saddle according to a second embodiment of the present invention.

FIG. 11 is an exploded perspective view illustrating the configuration of the angle adjuster for a bicycle saddle according to the second embodiment of the present invention.

Reference Numerals
10, 210: FRAME CONNECTOR
20, 220: SADDLE CONNECTOR
30: ANGLE ADJUSTING ASSEMBLY
31: MAIN CLUTCH
33: FIRST ADJUSTING MEMBER
35: FIRST TEETH
37: SECOND ADJUSTING MEMBER
39: SECOND TEETH
41: CLUTCH CONTROL SHAFT
51: SUB-CLUTCH
53: THIRD ADJUSTING MEMBER
55: THIRD TEETH
57: FOURTH ADJUSTING MEMBER
59: FOURTH TEETH
60: OPERATING LEVER
70: WIRE
80, 230: HEIGHT ADJUSTING ASSEMBLY
81: SADDLE SUPPORT SHAFT
83, 231: LOCKING GROOVE
89, 233: SUPPORT SPRING
91, 239: LOCKING MEMBER
92, 238: SUB-ELASTIC MEMBER
93, 245: SUB-OPERATING LEVER
95, 247: SUB-WIRE
95, 247: SUB-WIRE

## Claims

1. An angle adjuster (100,200) for a bicycle saddle (350) that is installed between a frame (350) of a bicycle and a saddle (350), the angle adjuster comprising:
- a frame connector (10,210) connected to the frame (330);
- a saddle connector (20; 220) rotatably connected to the upper end of the frame connector (10; 210) and supporting the saddle (350);
- an angle adjusting assembly (30) including :
- a main clutch (31) fixing and releasing the frame connector (10; 210) and the saddle connector (20; 220), and controlling rotational angle of the saddle connector (20; 220) with respect to the frame connector (10; 210) by the release operation of the main clutch (31);
said main clutch (31) including a first adjusting member (33) that has a plurality of first teeth (35) at one side and is fixed to the frame connector (10; 210) and a second adjusting member that has a plurality of second teeth (39) engaged with the first teeth (35) of the first adjusting member (33) and is fixed to the saddle connector (20; 220); and
- a clutch control shaft (41) that is fixed to any one of the first adjusting member (33) and the second adjusting member (37);
said clutch control shaft (41) being connected to the wire (70) to engage or disengage the first adjusting member (33) and the second adjusting member (37), when the operating lever (60) is operated.
said angle adjuster being **characterised in that** it further comprises:
- an operating lever (60) mounted on the frame (330) to operate the main clutch (31); and
- a wire (70) connecting the main clutch (31) with the operating lever (60) and operating the main clutch (31), when the operating lever (60) is operated;

2. The angle adjuster for a bicycle saddle according to claim 1, further comprising:
- a sub-clutch (51) including a third adjusting member (53) that has a plurality of third teeth (55) and is fixed to the saddle connector (20) and a fourth adjusting member (57) that has a plurality of fourth teeth (59) engaged with the third teeth (55) of the third adjusting member (53) and is fixed to the frame connector (10),
wherein any one of the third adjusting member (53) and the fourth adjusting member (57) of the sub-clutch (51) is fixed to the clutch control shaft (41), and the third adjusting member (53) and the fourth adjusting member (57) are controlled to be engaged or disengaged by the clutch control shaft (41).

3. The angle adjuster for a bicycle saddle according to claim 2, further comprising an elastic member (61) disposed between the main clutch (31) and the sub-clutch (51) to provide elastic force such that the first adjusting member (33) and the second adjusting member (37), and the third adjusting member (53) and the fourth adjusting member (57) are engaged with each other respectively.

4. The angle adjuster for a bicycle saddle according to claim 1, further comprising:
- a saddle support shaft (81) supporting the saddle (350), reciprocating in the saddle connector (20), and having a plurality of locking grooves (83) formed in the longitudinal direction of the shaft;
- a support spring (89) elastically supporting the saddle support shaft (81) such that the saddle (350) is spaced apart from the saddle connector (20);
- a locking member (91) selective locked in the locking grooves (83) to control height of the saddle support shaft (81);
- a sub-operating lever (93) mounted on the frame (330) and operating the locking member; and
- a sub-wire (95) connecting the locking member (91) with the sub-operating lever (93) and operating the locking member (91), when the sub-operating lever (93) is operated.

5. The angle adjuster for a bicycle saddle according to claim 4, further comprising a sub-elastic member (92) disposed between the saddle connector (200, 97) and the locking member (94) to provide elastic force such that the locking member (91) is locked in any one of the locking grooves (83).

6. The angle adjuster for a bicycle saddle according to claim 1, further comprising:
- a plurality of locking grooves (231) formed in the longitudinal direction of the frame connector (210) and received in the frame (330);
- a support spring (233) elastically supporting the frame connector (210) such that the frame connector (210) is spaced apart from the frame (330);
- a locking member (239) selectively locked in the locking grooves (231) to control height of the frame connector (210) with respect to the frame (330);
- a sub-operating lever (245) mounted on the frame (330) and operating the locking member (239); and
- a sub-wire (247) connecting the locking member (239) with the sub-operating lever (245) and operating the locking member (239), when the sub-operating lever (245) is operated.

7. The angle adjuster for a bicycle saddle according to claim 6, further comprising a sub-elastic member (238) disposed between the frame (330) and the locking member (239) to provide elastic force such that the locking member (239) is locked in any one of the locking grooves (231).

## Patentansprüche

1. Winkeleinstellvorrichtung (100; 200) für einen Fahrradsattel (350), die zwischen einem Rahmen (330) eines Fahrrads und einem Sattel (350) installiert ist, wobei die Winkeleinstellvorrichtung umfasst:
- ein Rahmenverbindungsstück (10; 210), das mit dem Rahmen (330) verbunden ist;
- ein Sattelverbindungsstück (20; 220), das drehbar mit dem oberen Ende des Rahmenverbindungsstücks (10; 210) verbunden ist und den Sattel (350) hält;
- eine Winkeleinstellanordnung (30), die umfasst:
- eine Hauptkupplung (31), die das Rahmenverbindungsstück (10; 210) und das Sattelverbindungsstück (20; 220) fixiert und löst und den Drehwinkel des Sattelverbindungsstücks (20; 220) in Bezug auf das Rahmenverbindungsstück (10; 210) durch den Lösearbeitsgang der Hauptkupplung (31) steuert;
wobei die Hauptkupplung (31) umfasst: ein erstes Einstellelement (33), das eine Vielzahl erster Zähne (35) auf einer Seite hat und an dem Rahmenverbindungsstück (10; 210) fixiert ist, und ein zweites Einstellelement (37), das eine Vielzahl zweiter Zähne (39) in Eingriff mit den ersten Zähnen (35) des ersten Einstellelements (33) hat und an dem Sattelverbindungsstück (20; 220) fixiert ist; und
- einen Kupplungssteuerschaft (41), der an jedem des ersten Einstellelements (33) und des zweiten Einstellelements (37) befestigt ist;
wobei die Winkeleinstellvorrichtung **dadurch gekennzeichnet ist, dass** sie ferner umfasst:
- einen Betätigungshebel (60), der auf den Rahmen (330) montiert ist, um die Hauptkupplung (31) zu betätigen; und
- einen Draht (70), der die Hauptkupplung (31) mit dem Betätigungshebel (60) verbindet und die Hauptkupplung (31) betätigt, wenn der Betätigungshebel (60) betätigt wird;
wobei der Kupplungssteuerschaft (41) mit dem Draht (70) verbunden ist, um das erste Einstellelement (33) und das zweite Einstellelement (37) in Eingriff zu bringen oder zu lösen, wenn der Betätigungshebel (60) betätigt wird.

2. Winkeleinstellvorrichtung für einen Fahrradsattel nach Anspruch 1, die ferner umfasst:
- eine Hilfskupplung (51), die umfasst: ein drittes Einstellelement (53), das eine Vielzahl dritter Zähne (55) hat und an dem Sattelverbindungsstück (20) befestigt ist, und ein viertes Einstellelement (57), das eine Vielzahl vierter Zähne (59) hat, die mit den dritten Zähnen (55) des dritten Einstellelements (53) in Eingriff sind, und das an dem Rahmenverbindungsstück (10) befestigt ist,
wobei jedes des dritten Einstellelements (53) und des vierten Einstellelements (57) der Hilfskupplung (51) an dem Kupplungssteuerschaft (41) befestigt ist, und das dritte Einstellelement (53) und das vierte Einstellelement (57) derart gesteuert werden, dass sie von dem Kupplungssteuerschaft (41) in Eingriff gebracht oder gelöst werden sollen.

3. Winkeleinstellvorrichtung für einen Fahrradsattel nach Anspruch 2, das ferner ein elastisches Element (61) umfasst, das zwischen der Hauptkupplung (31) und der Hilfskupplung (51) angeordnet ist, um eine elastische Kraft bereitzustellen, so dass das erste Einstellelement (33) und das zweite Einstellelement (37) und das dritte Einstellelement (53) und das vierte Einstellelement (57) jeweils miteinander in Eingriff gebracht werden.

4. Winkeleinstellvorrichtung für einen Fahrradsattel nach Anspruch 1, die ferner umfasst:
- einen Sattelhalteschaft (81), der den Sattel (350) hält, der sich in dem Sattelverbindungsstück (20) hin und her bewegt und eine Vielzahl von Verriegelungsnuten (83) hat, die in der Längsrichtung des Schafts ausgebildet sind;
- eine Haltefeder (89), die den Sattelhalteschaft (81) derart elastisch hält, dass der Sattel (350) von dem Sattelverbindungsstück (20) beabstandet ist;
- ein Sperrelement (91), das wahlweise in den Sperrnuten (83) gesperrt wird, um die Höhe des Sattelhalteschafts (81) zu steuern;
- einen Hilfsbetätigungshebel (93), der auf den Rahmen (330) montiert ist und der das Sperrelement betätigt; und
- einen Hilfsdraht (95), der das Sperrelement (91) mit dem Hilfsbetätigungshebel (93) verbindet und das Sperrelement (91) betätigt, wenn der Hilfsbetätigungshebel (93) betätigt wird.

5. Winkeleinstellvorrichtung für einen Fahrradsattel nach Anspruch 4, die ferner ein elastisches Hilfselement (92) umfasst, das zwischen dem Sattelverbindungsstück (20, 97) und dem Sperrelement (91) angeordnet ist, um eine elastische Kraft bereitzustellen, so dass das Sperrelement (91) in einer der Sperrnuten (83) gesperrt wird.

6. Winkeleinstellvorrichtung für einen Fahrradsattel nach Anspruch 1, die ferner umfasst:
- eine Vielzahl von Sperrrillen (231), die in der Längsrichtung des Rahmenverbindungsstücks (210) ausgebildet sind und in dem Rahmen (330) aufgenommen werden;
- eine Haltefeder (233), die das Rahmenverbindungsstück (210) elastisch hält, so dass das Rahmenverbindungsstück (210) von dem Rahmen (330) beabstandet ist;
- ein Sperrelement (239), das wahlweise in den Sperrnuten (231) gesperrt wird, um die Höhe des Rahmenverbindungsstücks (210) in Bezug auf den Rahmen (330) zu steuern;
- einen Hilfsbetätigungshebel (245), der auf dem Rahmen (330) montiert ist und der das Sperrelement (239) betätigt; und
- einen Hilfsdraht (247), der das Sperrelement (239) mit dem Hilfsbetätigungshebel (245) verbindet und das Sperrelement (239) betätigt, wenn der Hilfsbetätigungshebel (245) betätigt wird.

7. Winkeleinstellvorrichtung für einen Fahrradsattel nach Anspruch 6, die ferner ein elastisches Hilfselement (238) umfasst, das zwischen dem Rahmen (330) und dem Sperrelement (239) angeordnet ist, um eine elastische Kraft bereitzustellen, so dass das Sperrelement (239) in einer der Sperrrillen (231) gesperrt wird.

## Revendications

1. Dispositif de réglage d'angle (100; 200) pour une selle de bicyclette (350) qui est installée entre un cadre (330) d'une bicyclette et une selle (350), le dispositif de réglage d'angle comprenant:
- un raccord de cadre (10; 210) raccordé au cadre (330);
- un raccord de selle (20; 220) raccordé de façon rotative à l'extrémité supérieure du raccord de cadre (10; 210) et supportant la selle (350);
- un ensemble de réglage d'angle (30) comprenant:
- un embrayage principal (31) fixant et libérant le raccord de cadre (10; 210) et le raccord de selle (20; 220), et commandant l'angle de rotation du raccord de selle (20; 220) par rapport au raccord de cadre (10; 210) par l'opération de libération de l'embrayage principal (31);
- ledit embrayage principal (31) comprenant un premier élément de réglage (33) qui comporte une pluralité de premières dents (35) sur un côté et est fixé au raccord de cadre (10; 210) et un deuxième élément de réglage (37) qui comporte une pluralité de deuxièmes dents (39) en prise avec les premières dents (35) du premier élément de réglage (33) et est fixé au raccord de selle (20; 220); et
- une tige de commande d'embrayage (41) qui est fixée à un quelconque parmi le premier élément de réglage (33) et le deuxième élément de réglage (37);
ledit dispositif de réglage d'angle étant **caractérisé en ce qu'**il comprend:
- un levier de commande (60) monté sur le cadre (330) pour actionner l'embrayage principal (31); et
- un câble (70) raccordant l'embrayage principal (31) avec le levier de commande (60) et actionnant l'embrayage principal (31), lorsque le levier de commande (60) est actionné;
ladite tige de commande d'embrayage (41) étant raccordée au câble (70) pour mettre en prise ou séparer le premier élément de réglage (33) et le deuxième élément de réglage (37), lorsque le levier de commande (60) est actionné.

2. Dispositif de réglage d'angle pour une selle de bicyclette selon la revendication 1, comprenant en outre:
- un sous-embrayage (51) comprenant un troisième élément de réglage (53) qui comporte une pluralité de troisièmes dents (55) et est fixé au raccord de selle (20) et un quatrième élément de réglage (57) qui comporte une pluralité de quatrièmes dents (59) en prise avec les troisièmes dents (55) du troisième élément de réglage (53) et est fixé au raccord de cadre (10),
dans lequel un quelconque parmi le troisième élément de réglage (53) et le quatrième élément de réglage (57) du sous-embrayage (51) est fixé à la tige de commande d'embrayage (41), et le troisième élément de réglage (53) et le quatrième élément de réglage (57) sont commandés pour être en prise ou séparés par la tige de commande d'embrayage (41).

3. Dispositif de réglage d'angle pour une selle de bicyclette selon la revendication 2, comprenant en outre un élément élastique (61) disposé entre l'embrayage principal (31) et le sous-embrayage (51) pour fournir une force élastique de sorte que le premier élément de réglage (33) et le deuxième élément de réglage (37), et le troisième élément de réglage (53) et le quatrième élément de réglage (57) soient en prise l'un avec l'autre, respectivement.

4. Dispositif de réglage d'angle pour une selle de bicyclette selon la revendication 1, comprenant en outre:
- une tige de support de selle (81) supportant la selle (350), se déplaçant en va-et-vient dans le raccord de selle (20), et comportant une pluralité de rainures de verrouillage (83) formées dans la direction longitudinale de la tige;
- un ressort de support (89) supportant de façon élastique la tige de support de selle (81) de sorte que la selle (350) soit espacée du raccord de selle (20);
- un élément de verrouillage (91) verrouillé sélectivement dans les rainures de verrouillage (83) pour commander la hauteur de la tige de support de selle (81);
- un sous-levier de commande (93) monté sur le cadre (330) et actionnant l'élément de verrouillage; et
- un sous-câble (95) raccordant l'élément de verrouillage (91) avec le sous-levier de commande (93) et actionnant l'élément de verrouillage (91), lorsque le sous-levier de commande (93) est actionné.

5. Dispositif de réglage d'angle pour une selle de bicyclette selon la revendication 4, comprenant en outre un sous-élément élastique (92) disposé entre le raccord de selle (20, 97) et l'élément de verrouillage (91) pour fournir une force élastique de sorte que l'élément de verrouillage (91) soit verrouillé dans une quelconque des rainures de verrouillage (83).

6. Dispositif de réglage d'angle pour une selle de bicyclette selon la revendication 1, comprenant en outre:
- une pluralité de rainures de verrouillage (231) formées dans la direction longitudinale du raccord de cadre (210) et reçues dans le cadre (330);
- un ressort de support (233) supportant de façon élastique le raccord de cadre (210) de sorte que le raccord de cadre (210) soit espacé du cadre (330);
- un élément de verrouillage (239) sélectivement verrouillé dans les rainures de verrouillage (231) pour commander la hauteur du raccord de cadre (210) par rapport au cadre (330);
- un sous-levier de commande (245) monté sur le cadre (330) et actionnant l'élément de verrouillage (239); et
- un sous-câble (247) raccordant l'élément de verrouillage (239) avec le sous-levier de commande (245) et actionnant l'élément de verrouillage (239), lorsque le sous-levier de commande (245) est actionné.

7. Dispositif de réglage d'angle pour une selle de bicyclette selon la revendication 6, comprenant en outre un sous-élément élastique (238) disposé entre le cadre (330) et l'élément de verrouillage (239) pour fournir une force élastique de sorte que l'élément de verrouillage (239) soit verrouillé dans une quelconque des rainures de verrouillage (231).
